# FASCICULE DE BREVET EUROPEEN

(11) **EP 1 423 636 B1**
(45) Date de publication et mention de la délivrance du brevet: **11.01.2006**
(21) Numéro de dépôt: 02798756.9
(22) Date de dépôt: 03.09.2002
(51) Int. Cl.: F16L 37/084

(54) **RACCORD D'ETANCHEITE PRE-ASSEMBLE**
VORMONTIERTE DICHTUNGSVERBINDUNG
PRE-ASSEMBLED SEALING CONNECTION

(30) Priorité: 04.09.2001 FR 0111405
(43) Date de publication de la demande: 02.06.2004
(73) Titulaire: HUTCHINSON, 75008 Paris (FR)
(72) Inventeur: ANDRE, Maxime, I-Asso (IT)
(74) Mandataire: Jacquard, Philippe Jean-Luc
(86) Numéro de dépôt international: PCT/FR2002/002997
(87) Numéro de publication internationale: WO 2003/025450

(56) Documents cités:
- EP-A- 1 079 166
- US-A- 5 328 216
- US-A- 6 155 607

## Description

La présente invention concerne un raccord pré-assemblé pour raccorder de manière étanche un tube de transport de fluide et un embout.

On connaît déjà de tels raccords, par exemple des Brevets des Etats-Unis US 4 844 512, US 5 328 216 ou US 4 991 882. Ils comportent une partie femelle encliquetable dans une partie mâle constituant l'embout.

Le tube est emmanché dans une région cylindrique arrière (embout sapin) pourvue de nervures, de la partie femelle. La partie femelle présente également deux portées de joint pour recevoir un ou deux joints d'étanchéité avec l'embout.

Un tel raccord est relativement coûteux, et de plus il impose deux niveaux d'étanchéité réalisés par des moyens différents, d'une part à l'arrière entre le tube et ladite région cylindrique arrière, et à l'avant entre les parties femelle et mâle.

En outre, le montage du tube sur la région cylindrique arrière nervurée dite embout sapin n'est pas fiable, puisqu'elle ne résulte que d'un emmanchement à force.

Dans le cas des raccords pour circuits de refroidissement automobile, les raccords rapides pour tubes actuellement utilisés nécessitent également de réaliser deux fois l'étanchéité d'une part entre le tube et le raccord rapide, et entre le raccord rapide et l'embout, comme dans le cas des deux Brevets cités ci-dessus. En outre, ces raccords rapides ont un coût élevé.

De tels raccord sont produits par les Sociétés NORMA, RAYMOND, LEGRIS, JOHN GUEST, ITT, etc...

L'invention a pour objet de simplifier le raccord tout en en améliorant les fonctionnalités et notamment de mettre en oeuvre un seul élément garantissant l'étanchéité, d'où une diminution des risques de fuite.

L'invention concerne ainsi un raccord préassemblé pour raccorder de manière étanche un tube de transport de fluide et un embout pourvu d'au moins un élément d'accrochage selon la revendication 1.

Le dispositif d'accrochage peut présenter au moins un organe de préhension exerçant un effet de levier sur un élément d'accrochage pour permettre de démonter le raccord de l'embout.

Le dispositif d'accrochage peut présenter une région cylindrique coulissant le long du tube. Au moins un élément d'accrochage peut être constitué par un bras d'encliquetage.

Le dispositif d'accrochage présente avantageusement une face formant butée arrière pour l'élément d'étanchéité. Cette face est par exemple plane, mais, elle peut être concave, l'élément d'étanchéité présentant alors une face convexe complémentaire de cette face concave. Au moins un dit bras d'encliquetage et/ou au moins un organe de préhension peut se raccorder à une couronne annulaire.

L'invention concerne également une liaison étanche entre un tube de transport et un embout, qui se caractérise par la mise en oeuvre d'un raccord tel que défini ci-dessus, assemblé avec l'embout par coopération des éléments d'accrochage du dispositif d'accrochage et de l'embout.

L'élément d'étanchéité peut être immobilisé en étant pris en butée entre le renflement annulaire du tube, et le dispositif d'accrochage.

D'autres caractéristiques et avantages de l'invention apparaîtront mieux à la lecture de la description qui va suivre, en liaison avec les dessins dans lesquels :
- les figures 1a, 1b et 1c représentent en coupe longitudinale respectivement un raccord selon un premier mode de réalisation de l'invention, un embout qui lui correspond, et une liaison étanche comportant ledit raccord monté sur l'embout par encliquetage,
- les figures 2a à 2d représentent respectivement une deuxième mode de réalisation d'un raccord selon l'invention, monté sur un embout, pour former une liaison étanche (Fig. 2a), une vue en coupe longitudinale du dispositif d'accrochage (Fig. 2b), une vue suivant A du dispositif d'accrochage, et une vue en coupe de l'élément d'étanchéité (Fig. 2d),
- la figure 3 représente un mode de réalisation préféré d'un raccord selon l'invention, représenté monté sur un embout pour former une liaison étanche.
- et les figures 4a et 4b représentent en perspective une autre variante de raccord selon l'invention, avant et après pré-assemblage par mise en butée.

L'invention met en oeuvre un raccord rapide pré-assemblé sur un tube 4 rigide ou semi-rigide (c'est-à-dire suffisamment rigide pour assurer une étanchéité), par exemple en métal ou en matière plastique, qui est mis en forme à son extrémité avant 42 pour former un bourrelet annulaire 41. Cette mise en forme peut s'effectuer à froid, ou à chaud. Un élément d'étanchéité 5 en élastomère, par exemple en caoutchouc, enfilé sur le tube 4 (ou surmoulé sur celui-ci) permet d'assurer l'étanchéité sur le tube 4 et sur l'embout 3 par compression, grâce à un dispositif d'accrochage 6, par exemple en métal ou en matériau thermoplastique qui est enfilé sur le tube 4 et qui vient se raccorder sur l'embout 3 qui peut être d'un type classique, par exemple un embout couramment utilisé par les constructeurs automobiles dans les circuits de refroidissement. Le dispositif d'accrochage 6 peut être enfilé, notamment à force, ou surmoulé sur le tube 4.

Le raccord présente un nombre de composants correspondant chacun à une fonction, à savoir :
- un tube 4 pour le transfert de fluide,
- un élément 5 en élastomère pour l'étanchéité,
- et un dispositif 6 pour l'accrochage, par exemple par encliquetage.

Le raccord étant pré-assemblé, le montage s'effectue en une seule opération, par exemple par simple encliquetage.

Aux figures 1a à 1c, le raccord pré-assemblé comporte un élément d'étanchéité 5 en élastomère, de forme générale cylindrique, dont le diamètre du contour interne 56 est sensiblement égal ou légèrement inférieur au diamètre du contour externe 43 du tube 4, pour lui permettre de glisser le long du tube 4. Pour améliorer l'étanchéité, l'élément 5 présente sur sa face cylindrique externe 57 et/ou sur son contour interne cylindrique 56 un ou plusieurs bourrelets annulaires 51 et/ou 52. Le tube 4 peut être formé pour permettre un dégagement à 90° ou selon un autre angle.

En variante, l'élément 5 peut être surmoulé autour du tube 4. Le bourrelet annulaire 41 à l'extrémité avant du tube 4 sert de butée avant à la face avant 54 de l'élément d'étanchéité 5.

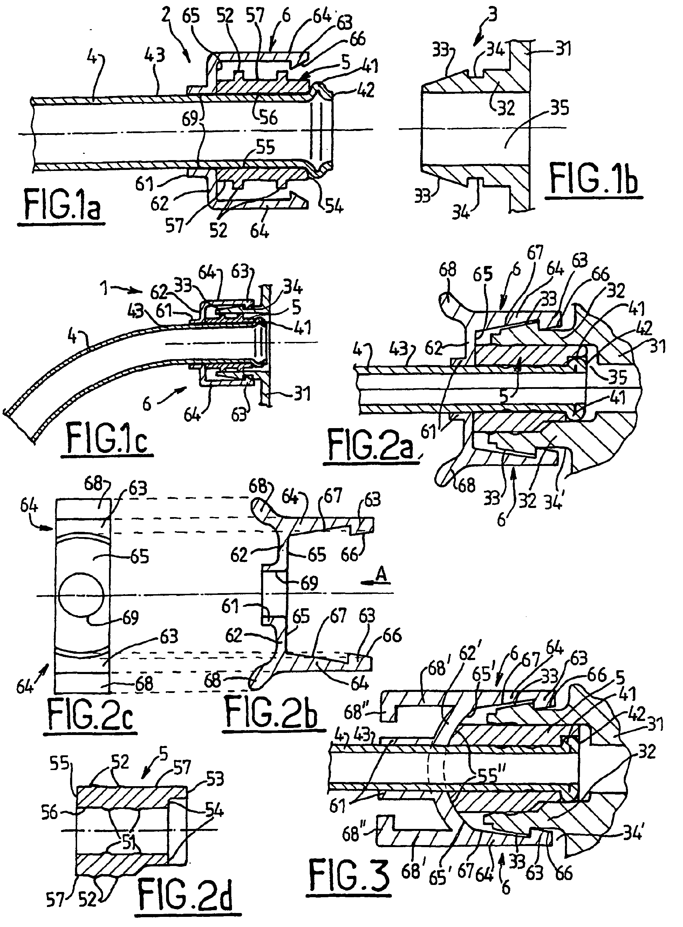

Le dispositif d'accrochage 6 présente une région cylindrique 61 dont le contour interne 69 a un diamètre adapté à son coulissement le long du contour externe 43 du tube 4. Les moyens d'accrochage 6 sont par exemple constitués par des bras d'encliquetage 64 par exemple deux bras situés à 180° l'un de l'autre (comme à la figure 2c).

Chaque bras 64 présente une région de rampe 66 pour un cliquet 63, qui vient s'encliqueter dans une rainure 34 d'une région cylindrique 32 de l'embout 3. Ces bras 64 sont par exemple articulés à partir d'une couronne annulaire 62. Une face avant 65 de la couronne 62 et/ou de la région 61 sert de butée arrière à la face arrière 55 de l'élément d'étanchéité 5. La région de rampe 66 coopère avec une région de rampe correspondante 33 de l'embout 3 pour faciliter l'approche du raccord 2 avant encliquetage, lequel s'effectue dans la position représentée à la figure 1c. Dans cette position, la face interne 67 des bras 64 jouxte les régions de rampe 33.

Dans cette position, les faces arrière 55 et avant 54 de l'élément 5 sont prises en butée entre la face 65 et le bourrelet 41.

L'élément d'étanchéité 5 assure alors les deux fonctions d'étanchéité recherchées, par son contour interne 56 entre le tube 4 et le raccord 2 et par son contour externe 57, entre le raccord 2 et l'embout 3 pourvu d'une embase 31.

Dans la variante représentée aux figures 2a à 2d, un ergot de préhension 68 est associé à chaque bras 64 pour permettre son dégagement de la rainure 34' par effet de levier, en déformant légèrement la couronne annulaire 62. Dans ce mode de réalisation, les ergots 68 s'étendent vers l'extérieur du raccord pour faciliter la prise en main.

Dans la variante représentée à la figure 3, la couronne annulaire 62' et donc sa face avant 65' n'est pas plane, comme dans les modes de réalisation précédents, mais elle est concave et sa face avant 65' coopère avec une face complémentaire convexe de profil complémentaire 55' de l'élément d'étanchéité 5. Cette forme arrondie permet, par compression des ergots 68', un démontage facilité du raccord 2 par rapport à l'embout 3.

En outre, les ergots 68' sont disposés dans le prolongement des bras 64 et ils présentent une extrémité 68" repliée par exemple à 90°, en direction de la région 61.

Ces extrémités 68" permettent, par effet de butée de l'extrémité 68", d'éviter de trop plier les ergots 68' lors du démontage du raccord 2.

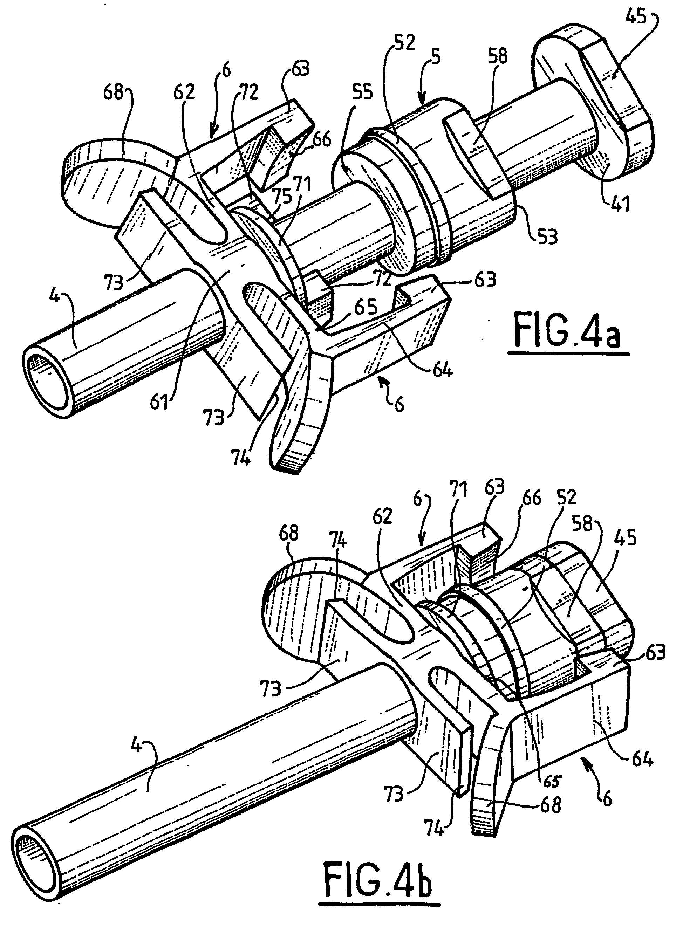

Dans la variante représentée aux figures 4a et 4b, l'extrémité annulaire 41 porte un méplat 45 de détrompage angulaire. Ce peut être également le cas du joint 5, avec un méplat d'extrémité 58, en vis-à-vis du méplat 45.

Le méplat 45 permet de garantir l'orientation du tube (dans une rotation autour de son axe), contrairement à un embout sapin qui peut tourner. Cette indexation peut être indépendante de l'orientation des composants intermédiaires.

D'autre part, la pièce d'accrochage 6 peut présenter une couronne cylindrique 71 jouxtant la face avant 65 et qui se prolonge vers l'avant par deux pattes 72 dont le contour interne 75 est apte à un emmanchement dans le périmètre du joint 5 en aval de sa face arrière 55. En position pré-assemblée (Fig. 4b), la face avant 73 de la couronne 71 est en butée sur la face arrière 55 du joint 5. Le joint 5 est en butée par sa face avant 53 sur l'extrémité annulaire 41 et l'emmanchement du contour interne 75 des pattes 72 autour du joint permet d'éviter une rotation de la pièce 6 autour du tube 4. On a ainsi réalisé un indexage angulaire des composants du raccord par rapport au méplat 45, qui est demandé dans certaines applications où la pièce 6 doit être positionnée selon une position angulaire précise par rapport au méplat 45.

En variante, cette orientation angulaire peut être obtenue par emmanchement à force de la pièce 6 sur le tube 4, avec mise en oeuvre éventuelle des pattes d'indexation 72.

L'indexation angulaire par le méplat 45 permet de repérer angulairement un dégagement du tube (à 90° ou selon un autre angle), pour le montage de l'embase. Il n'y a pas besoin pour cela de modifier les éléments qui composent le raccord. Autrement dit, il y a un seul type de raccord qui permet tous les dégagements angulaires, contrairement à l'Art. Antérieur, où il faut adapter les pièces de raccords.

L'invention permet de réaliser des raccordements de tubes de transport de fluide (eau, antigel, huile, carburant, air, fluide frigorigène de circuit de climatisation) plus particulièrement dans le domaine automobile.

Un autre avantage de l'invention est que seuls le tube 4 et le joint 5 doivent résister au fluide.

L'invention peut s'appliquer en particulier au circuit de dégazage d'un circuit de refroidissement automobile.

## Revendications

1. Raccord pré-assemblé pour raccorder de manière étanche un tube de transport de fluide et un embout pourvu d'au moins un élément d'accrochage, ayant une rainure dans une région cylindrique externe **caractérisé en ce qu'**il comporte :
- un dit tube (4), lequel présente à une extrémité avant (42) un renflement annulaire (41) ;
- un dispositif d'accrochage (6) glissé sur ledit tube (4) et présentant au moins un bras (63, 64) formant un élément d'encliquetage venant s'encliqueter dans une rainure (34) d'une région cylindrique externe (32) de l'embout (3) ;
- et un élément d'étanchéité (5) cylindrique en élastomère disposé autour dudit tube (4) et logé entre le dispositif d'accrochage (6) et le renflement annulaire (41), ledit élément d'étanchéité (5) présentant une surface interne (56) d'étanchéité avec une surface externe (43) du tube (4) et une surface externe (57) d'étanchéité avec une surface interne de l'embout (3).

2. Raccord selon la revendication 1, **caractérisé en ce que** le dispositif d'accrochage (6) présente au moins un organe de préhension (68) exerçant un effet de levier sur un élément d'accrochage (64, 66) pour permettre de démonter le raccord (2) de l'embout (3).

3. Raccord selon une des revendication 1 ou 2, **caractérisé en ce que** le dispositif d'accrochage (6) présente une région cylindrique (61, 69) coulissant le long du tube (4).

4. Raccord selon une des revendications 1 ou 2, **caractérisé en ce que** le dispositif d'accrochage (6) présente une région cylindrique (61, 69) coulissant à force le long du tube (4).

5. Raccord selon une des revendications précédentes, **caractérisé en ce que** le dispositif d'accrochage (6) présente une face (65, 65') formant butée arrière (55, 55') pour l'élément d'étanchéité (5).

6. Raccord selon la revendication 5, **caractérisé en ce que** ladite face ((65) est plane.

7. Raccord selon la revendication 5, **caractérisé en ce que** ladite face (65') est concave, et **en ce que** l'élément d'étanchéité (5) présente une face convexe (55') complémentaire de ladite face concave (65').

8. Raccord selon une des revendications précédentes, **caractérisé en ce qu'**au moins un dit bras (63, 64) se raccorde à une dite couronne annulaire (62) du dispositif d'accrochage (6).

9. Raccord selon la revendication 8, **caractérisé en ce qu'**au moins un organe de préhension (68) se raccorde à ladite couronne annulaire (62).

10. Raccord selon une des revendications précédentes, **caractérisé en ce que** le renflement annulaire (41) et/ou la partie avant du joint (5) présente à son pourtour un élément d'indexation angulaire (45, 58), notamment un méplat.

11. Raccord selon une des revendications précédentes, **caractérisé en ce que** le dispositif d'accrochage (6) présente au moins un élément (72) pouvant s'emmancher à force sur le périmètre interne de la partie arrière du joint (5).

12. Raccord selon une des revendications précédentes, **caractérisé en ce qu'**il est pré-assemblé avec mise en butée du dispositif d'accrochage (6) sur le joint (5) et du joint (5) sur le renflement annulaire (41).

13. Raccord selon les revendications 11 et 12, **caractérisé en ce que** le dispositif d'accrochage (6) est pré-assemblé en étant indexé angulairement par rapport audit élément d'indexation angulaire (45, 58).

14. Liaison étanche entre un tube de transport et un embout, **caractérisée en ce qu'**elle comporte un raccord (2) selon une des revendications précédentes, assemblé avec l'embout (3) par coopération des éléments d'accrochage (63, 34) du dispositif d'accrochage (6) et de l'embout (3).

15. Liaison étanche selon la revendication 14, **caractérisée en ce que** l'élément d'étanchéité (5) est immobilisé en étant pris en butée (53, 55) entre le renflement annulaire (41) du tube (4) et le dispositif d'accrochage (6).

16. Liaison étanche selon la revendication 15, **caractérisée en ce que** le raccord présente au moins un dit élément d'indexation angulaire (45, 58) et **en ce que** le dispositif d'accrochage (6) est indexé angulairement par rapport audit élément d'indexation angulaire (45, 58).

## Patentansprüche

1. Vormontiertes Verbindungsstück zum in abdichtender Weise Verbinden eines Fluidtransportrohres und eines Ansatzstücks, welches mit wenigstens einem Kopplungselement mit einer Rille in einem zylindrischen Außenbereich versehen ist,
**dadurch gekennzeichnet,**
**dass** es umfasst:
- ein besagtes Rohr (4), welches an einem Vorderende (42) eine ringförmige Verdickung (41) aufweist;
- eine Kopplungsvorrichtung (6), welche auf das Rohr (4) aufgeschoben ist und wenigstens einen Arm (63, 64) aufweist, welcher ein Einrastelement bildet, das in einer Rille (34) eines zylindrischen Außenbereichs (32) des Ansatzstücks (3) einrastet;
- ein zylindrisches Dichtungselement (5) aus einem Elastomer, welches um das Rohr (4) herum angeordnet ist und in der Kopplungsvorrichtung (6) und der ringförmigen Verdickung (41) aufgenommen ist, wobei das Dichtungselement (5) eine innere Oberfläche (56) zur Abdichtung mit einer äußeren Oberfläche (43) des Rohres (4) und eine äußere Oberfläche (57) zur Abdichtung mit einer inneren Oberfläche des Ansatzstücks (3) aufweist.

2. Verbindungsstück nach Anspruch 1,
**dadurch gekennzeichnet,**
**dass** die Kopplungsvorrichtung (6) wenigstens ein Greiforgan (68) aufweist, welches einen Hebeleffekt auf ein Kopplungselement (64, 66) ausübt, um zu ermöglichen, das Verbindungsstück (2) und das Ansatzstück (3) auseinander zu nehmen.

3. Verbindungsstück nach einem der Ansprüche 1 oder 2,
**dadurch gekennzeichnet,**
**dass** die Kopplungsvorrichtung (6) einen zylindrischen Bereich (61, 69) aufweist, welcher entlang des Rohres (4) verschiebbar ist.

4. Verbindungsstück nach einem der Ansprüche 1 oder 2,
**dadurch gekennzeichnet,**
**dass** die Kopplungsvorrichtung (6) einen zylindrischen Bereich (61, 69) aufweist, welcher mit Kraft entlang des Rohres (4) verschiebbar ist.

5. Verbindungsstück nach einem der vorhergehenden Ansprüche,
**dadurch gekennzeichnet,**
**dass** die Kopplungsvorrichtung (6) eine Seite (65, 65') aufweist, welche einen hinteren Anschlag (55, 55') für das Dichtungselement (5) bildet.

6. Verbindungsstück nach Anspruch 5,
**dadurch gekennzeichnet,**
**dass** die Seite (65) eben ist.

7. Verbindungsstück nach Anspruch 5,
**dadurch gekennzeichnet,**
**dass** die Seite (65') konkav ist und dass das Dichtungselement (5) eine konvexe Seite (55') aufweist, welche komplementär zu der konkaven Seite (65') ist.

8. Verbindungsstück nach einem der vorhergehenden Ansprüche,
**dadurch gekennzeichnet,**
**dass** wenigstens ein besagter Arm (63, 64) sich mit einem besagten ringförmigen Kranz (62) der Kopplungsvorrichtung (6) verbindet.

9. Verbindungsstück nach Anspruch 8,
**dadurch gekennzeichnet,**
**dass** wenigstens ein Greiforgan (68) sich mit dem ringförmigen Kranz (62) verbindet.

10. Verbindungsstück nach einem der vorhergehenden Ansprüche,
**dadurch gekennzeichnet,**
**dass** die ringförmige Verdickung (41) und/oder der Vorderteil der Dichtung (5) an ihrem/seinem Umfang ein Winkelpositionierungselement (45, 58), insbesondere eine Abflachung, aufweist.

11. Verbindungsstück nach einem der vorhergehenden Ansprüche,
**dadurch gekennzeichnet,**
**dass** die Kopplungsvorrichtung (6) wenigstens ein Element (72) aufweist, welches sich auf den Innendurchmesser des Hinterteils der Dichtung (5) aufpressen kann.

12. Verbindungsstück nach einem der vorhergehenden Ansprüche,
**dadurch gekennzeichnet,**
**dass** es vormontiert ist, wobei die Kopplungsvorrichtung (6) auf der Dichtung (5) und die Dichtung (5) auf der ringförmigen Verdickung (41) in Anschlag gebracht ist.

13. Verbindungsstück nach Anspruch 11 und 12,
**dadurch gekennzeichnet,**
**dass** die Kopplungsvorrichtung (6) vormontiert ist, wobei sie im Winkel bezüglich des Winkelpositionierungselements (45, 58) positioniert ist.

14. Abgedichtete Verbindung zwischen einem Transportrohr und einem Ansatzstück,
**dadurch gekennzeichnet,**
**dass** sie ein Verbindungsstück (2) gemäß einem der vorhergehenden Ansprüche umfasst, welches mit dem Ansatzstück (3) durch Zusammenwirken der Kopplungselemente (63, 34) der Kopplungsvorrichtung (6) und des Ansatzstücks (3) zusammengefügt ist.

15. Abgedichtete Verbindung nach Anspruch 14,
**dadurch gekennzeichnet,**
**dass** das Dichtungselement (5) fixiert ist, wobei es sich zwischen der ringförmigen Verdickung (41) des Rohres (4) und der Kopplungsvorrichtung (6) im Anschlag (53, 55) befindet.

16. Abgedichtete Verbindung nach Anspruch 15,
**dadurch gekennzeichnet,**
**dass** das Verbindungsstück wenigstens ein besagtes Winkelpositionierungselement (45, 58) aufweist und dass die Kopplungsvorrichtung (6) im Winkel bezüglich des Winkelpositionierungselements (45, 58) positioniert ist.

## Claims

1. A pre-assembled coupling for leaktight coupling of a fluid transport tube and an endpiece provided with at least one fastener element having a groove in an outer cylindrical region, the coupling being **characterized in that** it comprises:
· a said tube (4), which tube presents an annular bead (41) at a front end (42);
· a fastener device (6) slid onto said tube (4) and presenting at least one arm (63, 64) forming a snap-fastening element that comes to snap-fasten in a groove (34) of an outer cylindrical region (32) of the endpiece (3); and
· a cylindrical elastomer sealing element (5) disposed around said tube (4) and housed between the fastener device (6) and the annular bead (41), said sealing element (5) presenting an inner sealing surface (56) for sealing relative to an outside surface (43) of the tube (4), and an outer sealing surface (57) for sealing relative to inner surface of the endpiece (3).

2. A coupling according to claim 1, **characterized in that** the fastener device (6) presents at least one grip member (68) exerting a lever effect on a fastener element (64, 66) to enable the coupling (2) to be uncoupled from the endpiece (3).

3. A coupling according to claim 1 or claim 2, **characterized in that** the fastener device (6) presents a cylindrical region (61, 69) slidable along the tube (4).

4. A coupling according to claim 1 or claim 2, **characterized in that** the fastener device (6) presents a cylindrical region (61, 69) slidable under force along the tube (4).

5. A coupling according to any preceding claim, **characterized in that** the fastener device (6) presents a face (65, 65') forming a rear abutment (55, 55') for the sealing element (5).

6. A coupling according to claim 5, **characterized in that** said face (65) is plane.

7. A coupling according to claim 5, **characterized in that** said face (65') is concave, and **in that** the sealing element (5) presents a convex face (55') complementary to said concave face (65').

8. A coupling according to any preceding claim, **characterized in that** at least one of said arms (63, 64) is connected to a said annular ring (62) of the fastener device (6).

9. A coupling according to claim 8, **characterized in that** at least one grip member (68) is connected to said annular ring (62).

10. A coupling according to any preceding claim, **characterized in that** the annular bead (41) and/or the front portion of the gasket (5) presents at its periphery an angular indexing element (45, 58), in particular a flat.

11. A coupling according to any preceding claim, **characterized in that** the fastener device (6) presents at least one element (72) suitable for being engaged by force against the inner perimeter of the rear portion of the gasket (5).

12. A coupling according to any preceding claim, **characterized in that** it is pre-assembled with the fastener device (6) being put into abutment against the gasket (5) and with the gasket (5) being put into abutment against the annular bead (41).

13. A coupling according to claims 11 and 12, **characterized in that** the fastener device (6) is pre-assembled, being angularly indexed relative to said angular indexing element (45, 58).

14. A leaktight connection between a transport tube and an endpiece, **characterized in that** it comprises a coupling (2) according to any preceding claim assembled with the endpiece (3) by co-operation between the fastener elements (63, 34) of the fastener device (6) and of the endpiece (3).

15. A leaktight connection according to claim 14, **characterized in that** the sealing element (5) is prevented from moving by being held in abutment (53, 55) between the annular bead (41) of the tube (4) and the fastener device (6).

16. A leaktight connection according to claim 15, **characterized in that** the coupling presents at least one said angular indexing element (45, 58), and **in that** the fastener device (6) is angularly indexed relative to said angular indexing element (45, 58).
